# EUROPÄISCHE PATENTSCHRIFT

(11) **EP 1 551 526 B1**
(45) Veröffentlichungstag und Bekanntmachung des Hinweises auf die Patenterteilung: **03.01.2007**
(21) Anmeldenummer: 03753511.9
(22) Anmeldetag: 07.10.2003
(51) Int. Cl.: B01D 29/35, B01D 36/02

(54) **ABSCHEIDEVORRICHTUNG, INSBESONDERE ZUR ABSCHEIDUNG VON FESTSTOFFEN AUS FLÜSSIGKEITEN**
SEPARATING DEVICE, PARTICULARLY FOR SEPARATING SOLIDS FROM LIQUIDS
DISPOSITIF DE SEPARATION, NOTAMMENT POUR EXTRAIRE DES SOLIDES CONTENUS DANS DES LIQUIDES

(30) Priorität: 18.10.2002 DE 10248638
(43) Veröffentlichungstag der Anmeldung: 13.07.2005
(73) Patentinhaber: Hydac Process Technology GmbH, 66538 Neunkirchen (DE)
(72) Erfinder: WNUK, Ralf, 66450 Bexbach (DE); MARETYAK, Markus, 66978 Clausen (DE)
(74) Vertreter: Bartels, Martin Erich Arthur
(86) Internationale Anmeldenummer: PCT/EP2003/011041
(87) Internationale Veröffentlichungsnummer: WO 2004/037381

(56) Entgegenhaltungen:
- EP-A- 0 387 828
- EP-A- 0 827 768
- FR-A- 1 206 619
- US-A- 4 055 500
- US-A- 4 551 247

## Beschreibung

Die Erfindung bezieht sich auf eine Rückspülfilteranlage, mit den Merkmalen des Oberbegriffes des Patentanspruches 1.

Rückspülfilteranlagen der genannten Art werden beispielsweise zur Aufbereitung von Brauchwasser für die verschiedensten Zwecke, beispielsweise bei Kraftwerken, der Fernwärmeversorgung, bei Kläranlagen, im Bergbau, in der Papierindustrie oder dergleichen, eingesetzt, um die jeweils eingesetzten Verfahrensflüssigkeiten so aufzubereiten, dass Düsen, Pumpen, Wärmetauscher und dergleichen vor Verstopfung oder Verschleiß gesichert sind.

Die bei Rückspülfilteranlagen, wie sie beispielsweise aus der DE-A-199 56 859 bekannt sind, anfallenden Rückspülmengen enthalten Feststoffpartikel, die bei den jeweiligen Rückspülvorgängen von den Filterelementen abgelöst und zusammen mit der den Rückspülvorgang bewirkenden Verfahrensflüssigkeit als Rückspülmenge ausgeschwemmt werden. Je nach Filterfeinheit der Filterelemente der Rückspülfilteranlage, wobei Filterfeinheiten von 50 bis 3000 Mikrometer je nach Art der Verschmutzung und des Verwendungszweckes der Verfahrensflüssigkeit in Frage kommen, enthält die Rückspülmenge eine Ansammlung entsprechend kleiner Schmutzpartikel, die in der Abscheidevorrichtung abzuscheiden sind, um zu ermöglichen, dass die nach dem Abscheidevorgang verbliebene Restflüssigkeit der Rückspülmenge als aufbereitete Flüssigkeit dem betreffenden Flüssigkeitssystem wieder zugeführt werden kann.

Eine gattungsgemäße Rückspülfilteranlage ist durch die EP-A-0 387 828 bekannt. Bei der bekannten Lösung ist dem Rückspülfilter der bekannten Rückspülfilteranlage ein Sackfilter als Filtereinrichtung nachgeschaltet, um dergestalt die sich bei der Rückspülung ergebenden Verschmutzungen aus dem Fluidstrom mittels des Sackfilters auszuscheiden.

Des weiteren ist durch die FR-A-1 206 619 eine Abscheidevorrichtung bekannt, mit einem Gehäuse, einer Siebtrommel sowie einem Strahlrohr, das sich bezogen auf seine Mündung an der Innenseite der Siebwand der Siebtrommel, zu dieser tangential erstreckt, wobei ein Ausgang am Boden der Siebtrommel mit einer Einrichtung zum Abführen der abgesunkenen schlammartigen Masse versehen ist. Dahingehende Abscheidevorrichtungen (vgl. auch US-A-4 551 247) kommen insbesondere dann zur Anwendung, wenn Flüssigkeiten aufzubereiten sind, die mit störenden Feststoffen belastet sind. Mit den bekannten Lösungen läßt sich mittels des Strahlrohres ins Innere der Trommel eine Fluidmenge so zuführen, dass eine Drallströmung an der Siebwand ausgebildet wird, wobei sich dann an der gesamten, die Drallströmung umgebenden Siebwandfläche aufgrund der Zentrifugalkraftkomponente der anliegenden Drallströmung ein Druckgradient für den in Radialrichtung erfolgenden Durchstrom der Flüssigkeit durch die Siebwand ergibt, während die enthaltenen Partikel an der Siebwand abgetrennt werden und aufgrund der durch die Drallströmung bewirkten Agitation, die die bleibende Anlagerung der Partikel an der Siebwand verhindert, zum Boden der Siebtrommel absinken.

Ausgehend von dem vorgenannten Stand der Technik stellt sich die Erfindung die Aufgabe, eine Rückspülfilteranlage der genannten Art derart weiter auszubilden, dass diese besonders einfach aufbaut und wirtschaftlich betreibbar ist, wobei die Verunreinigungen des Rückspülstroms schneller konzentrierbar sein sollen, um den möglichen Abscheidungsgrad insgesamt zu verbessern. Eine dahingehende Aufgabe löst eine Rückspülfilteranfage mit den Merkmalen des Patentanspruches 1 in seiner Gesamtheit.

Dadurch, dass gemäß dem kennzeichnenden Teil des Patentanspruches 1 für die Rückspülfilteranlage
- eine Abscheidevorrichtung vorhanden ist zur Abscheidung von Feststoffen aus der Rückspülmenge, mit
   - einem Drallsieb in Form einer Siebtrommel mit ringförmiger Siebwand,
   - einem die Flüssigkeit der Siebtrommel zuführenden Strahlrohr, das sich, bezogen auf seine Mündung an der Innenseite der Siebwand der Siebtrommel, zu dieser zumindest näherungsweise tangential erstreckt, um eine Drallströmung der Flüssigkeit an der Siebwand zu erzeugen und das über eine Leitung mit dem Auslass für die Rückspülmenge verbunden ist,
   - einem die Siebtrommel zur Aufnahme von die Siebwand durchdringender Flüssigkeit umgebenden Gehäuse und
   - einem am Boden der Siebtrommel befindlichen Ausgang zum Abführen der abgeschiedenen Stoffe, wobei
- die Abscheidevorrichtung vor die Filtereinrichtung geschaltet ist, lassen sich die möglichen Verunreinigungen des Rückspülstroms schneller mittels der Abscheidevorrichtung konzentrieren, um dergestalt größere Mengen an Rückspülstrom bearbeiten zu können. Ferner besteht die Möglichkeit, dergestalt die Menge an Restflüssigkeit in den schlammartigen Massen zu vermindern, was wiederum die Möglichkeit eröffnet die Größe der Filtereinrichtung, insbesondere in Form eines Sackfilters zu reduzieren.
   Insgesamt ist durch die Anordnung der Abscheidevorrichtung in Fluidrichtung vor der Filtereinrichtung (Sackfilter) der mögliche Abscheidungsgrad an Feststoffverschmutzungen aus Flüssigkeiten deutlich verbessert.
   Aufgrund des beim Abscheidevorgang an der Siebwand aufgrund der Zentrifugalkraftkomponente erzeugten Druckgradienten ist ein hoher Flüssigkeitsdurchsatz durch die Siebwand der Siebtrommel hindurch selbst bei sehr großen Filterfeinheiten, bis herab zu 2 Mikrometern, gewährleistet, so dass eine Abscheidung feinster Partikel erreicht wird und so die die Siebwand der Siebtrommel durchdringende Flüssigkeit als aufbereitete Flüssigkeit wieder dem betreffenden Rückspülfiltersystem zugeführt werden kann.
   Als Einrichtung zum Abführen der auf den Boden der Siebtrommel abgesunkenen schlammartigen Masse, die die abgeschiedenen Stoffe enthält, kann ein an einer Öffnung des Bodens der Siebtrommel befindliches, nach unten führendes Rohrstück vorgesehen sein, in dem die schlammartige Masse durch Schwerkraft gefördert wird. Alternativ kann das untere Ende des Rohrstückes mit einer motorisch angetriebenen Fördereinrichtung zum Abführen der schlammartigen Masse versehen sein, wobei in beiden Fällen eine Filtereinrichtung vorgesehen ist, die die schlammartige Masse aufnimmt, um die in der schlammartigen Masse befindliche Restflüssigkeit von den abgeschiedenen Feststoffen zu separieren, so dass diese in teilweise entwässertem Zustand abgeführt werden können.
   Sofern vorzugsweise der Auslass der Rückspülfilter durch ein schnell öffnendes Absperrventil sperrbar und freigebbar ist, ergibt sich die Möglichkeit, einen jeweiligen Rückspülvorgang durch schnelles Öffnen des Absperrventiles stoßartig einzuleiten, so dass die Ablösung von Schmutzstoffen von dem am Rückspülvorgang jeweils beteiligten Filterelement der Rückspülfilteranlage impulsunterstützt erfolgt, mit der Folge, dass auch hartnäkkige Verschmutzungen durch Rückspülen entfernt werden können. Gleichzeitig ergibt sich eine besonders gute Abscheideleistung in der Abscheidevorrichtung dadurch, dass die Strömung in der Siebtrommel stoßartig erzeugt wird, so dass auch der Abscheidevorgang impulsunterstützt stattfindet.
   Nachstehend ist die Erfindung anhand von in der Zeichnung dargestellten Ausführungsbeispielen im einzelnen erläutert. Es zeigen:
   - • Fig. 1: eine perspektivisch und schematisch vereinfacht gezeichnete Gesamtdarstellung der Rückspülfilteranlage mit einem Ausführungsbeispiel der Abscheidevorrichtung, die in Fluidrichtung vor der Filtereinrichtung angeordnet ist;
   - • Fig. 2: eine gegenüber Fig. 1 vergrößert, perspektivisch und abgebrochen gezeichnete Teildarstellung nur des eine Siebtrommel enthaltenden Hauptteils eines Ausführungsbeispieles der Abscheidevorrichtung;
   - • Fig. 3: eine gegenüber Fig. 2 in kleinerem Maßstab, perspektivisch und stark vereinfacht gezeichnete Darstellung eines Ausführungsbeispieles der Abscheidevorrichtung in Verbindung mit dem Tank eines Flüssigkeitssystems;
   - • Fig. 4: eine der Fig. 3 ähnliche Darstellung eines abgewandelten Beispieles der Abscheidevorrichtung und
   - • Fig. 5: eine der Fig. 1 ähnliche Gesamtdarstellung einer abgewandelten Rückspülfilteranlage.

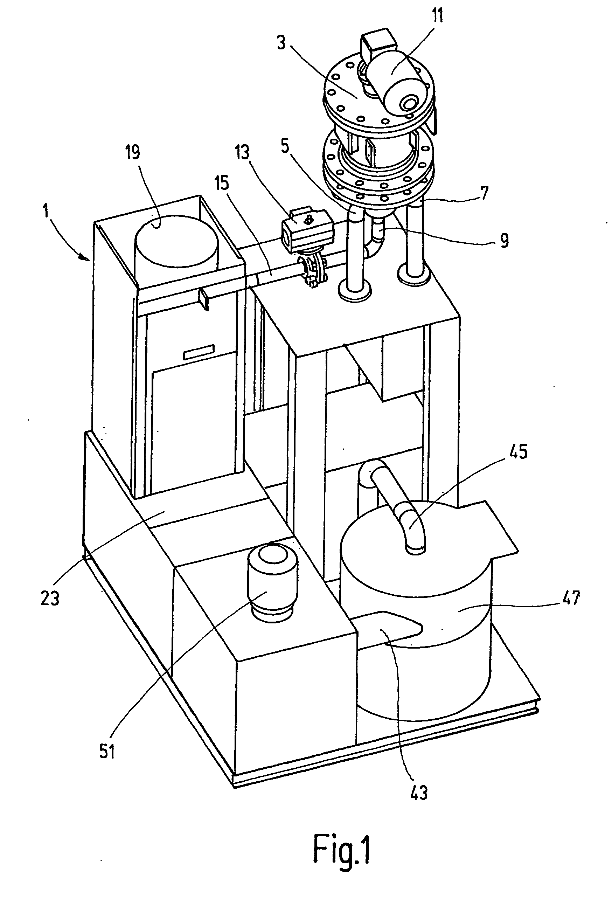

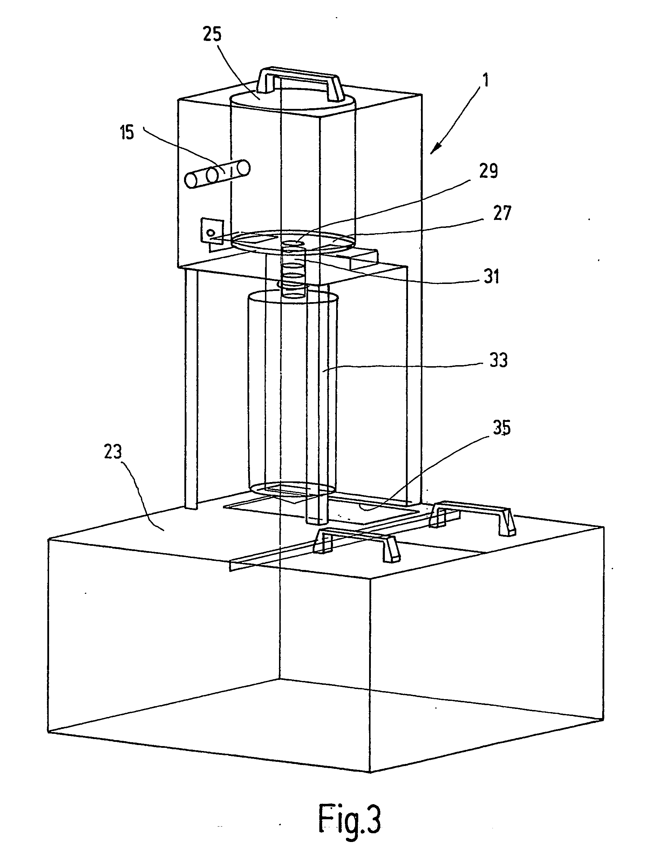

Nachstehend ist die Erfindung anhand eines Anwendungsbeispieles erläutert, bei dem die in den Fig. als Ganzes mit 1 bezeichnete Abscheidevorrichtung einer Rückspülfilter 3 (Fig. 1 und 3) nachgeschaltet ist, um aus den von der Rückspülfilter 3 abgegebenen Rückspülmengen die darin enthaltenen Verschmutzungs-Feststoffe abzuscheiden. Bei der hier dargestellten Rückspülfilter 3 handelt es sich um eine Anlage bekannten Typs, vgl. DE 199 56 859 A1, bei der über einen Zulauf 5 aufzubereitende Flüssigkeit zugeführt, das Filtrat als aufbereitete Flüssigkeit über einen Ablauf 7 abgeführt und Rückspülmengen, die bei Rückspülvorgängen anfallen, über einen Auslass 9 abgegeben werden. Bei der Rückspülfilter 3 werden in bekannter Weise Spaltrohr-Filterelemente von innen nach außen von der aufzubereitenden Flüssigkeit durchströmt. Ein mittels eines Getriebemotors 11 schwenkbarer Rückspülarm, der mit dem Auslass 9 in Fluidverbindung ist, wird für einen Rückspülvorgang mittels des Motors 11 unter das zu reinigende Filterelement geschwenkt. Während der Filtrationsbetrieb der übrigen Filterelemente kontinuierlich weiterlaufen kann, durchströmt das Filtrat, d. h die das zu reinigende Filterelement umgebende Flüssigkeit, das Filterelement, dessen Innenraum über den Rückspülarm mit dem Auslass 9 verbunden ist, nunmehr von außen nach innen, so daß Schmutzpartikel aus dem Innenraum des betreffenden Filterelementes über den Auslass 9 ausgespült werden.

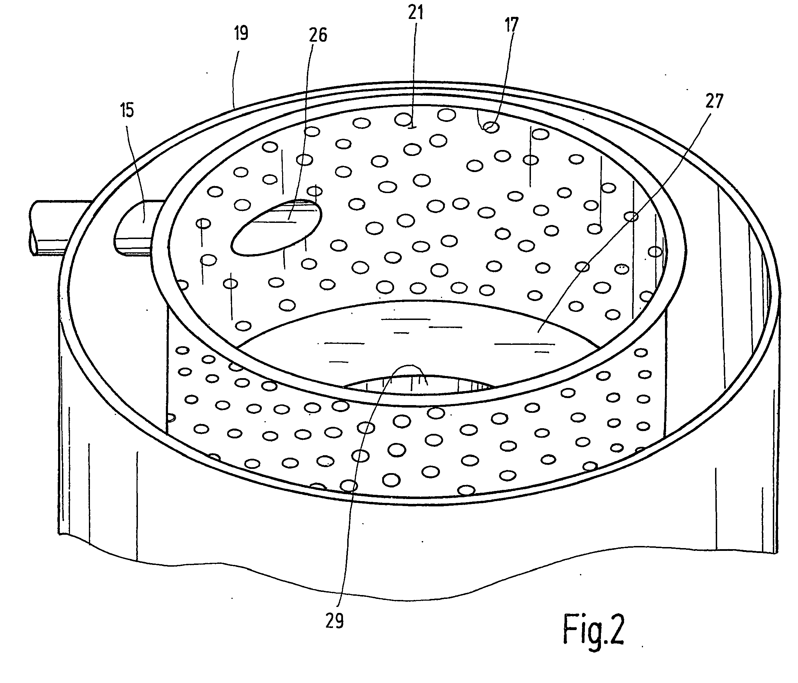

Der Auslass 9 ist mittels eines nur in Fig. 1 gezeigten, schnell öffnenden Absperrventiles 13 freigebbar und sperrbar. Über das Absperrventil 13 gelangen die am Auslass 9 ausgegebenen Rückspülmengen über ein Strahlrohr 15 zur Abscheidevorrichtung 1. Der Aufbau der Abscheidevorrichtung 1 ist aus den Fig. 2 bis 4 ersichtlich, wobei die wesentlichsten Einzelheiten insbesondere in Fig. 2 dargestellt sind. Wie hieraus ersichtlich, ist eine kreisrunde Siebtrommel 17 in einem kreiszylinderförmigen Gehäuse 19 konzentrisch, feststehend angeordnet. Das die Siebwand 21 der Siebtrommel 17 umgebende Gehäuse 19 nimmt Flüssigkeit, das aus dem Innenraum der Siebtrommel 17 durch die Siebwand 21 hindurch tritt, auf und führt diese durch die Siebtrommel 17 gesiebte Flüssigkeit als aufbereitete Flüssigkeit über eine nicht näher dargestellte Fluidverbindung einer Tankanlage 23 eines zugehörigen Flüssigkeitssystemes zu. Bei den in den Figuren gezeigten Ausführungsbeispielen ist die Abscheidevorrichtung 1 jeweils auf der Oberseite der betreffenden Tankanlage 23 gelagert.

Die Fig. 2, in der das Gehäuse 19 mit abgenommenem Deckel dargestellt ist, der lediglich in Fig. 3 gezeigt und mit 25 bezeichnet ist, zeigt, dass das Strahlrohr 15, welches sich durch die Wand des Gehäuses 19 und die Siebwand 21 der Siebtrommel 17 hindurch in deren Innenraum erstreckt, in diesen Innenraum in einer Richtung einmündet, die, bezogen auf die Mündung 26 des Strahlrohres 15, zumindest näherungsweise tangential gerichtet ist, so dass durch die über das Strahlrohr 15 eingeströmte Rückspülmenge in der Siebtrommel 17 eine Drallströmung erzeugt wird, die die Innenseite der Siebwand 21 bestreicht. Die Kreiselwirkung dieser Drallströmung, d. h. die dadurch in der Rückspülmenge erzeugte Zentrifugalkraftkomponente, ermöglicht den Durchtritt eines hohen Volumenstromes an durch die Siebwand 21 hindurch tretender Flüssigkeit, selbst wenn die Siebwand 21 ein Filterelement sehr hoher Filterfeinheit bildet. Dadurch ermöglicht sich die Abscheidung von Fremdstoffen selbst sehr kleiner Partikelgrößen bei ausreichend hohem Durchsatz an anfallenden Rückspülmengen.

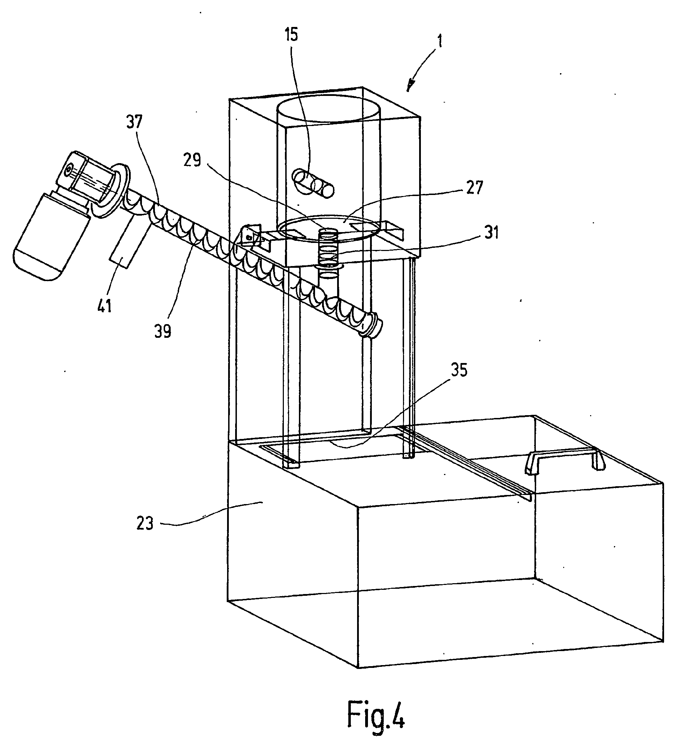

Wie Fig. 2 bis 4 zu entnehmen ist, befindet sich am Boden 27 der Siebtrommel 17 ein Ausgang 29, an den sich ein Rohrstück 31 (siehe Fig. 3 und 4) anschließt, über das eine schlammartige Masse, die sich beim Abscheidevorgang in der Siebtrommel 17 gebildet hat und zum Boden 27 der Siebtrommel abgesunken ist, abgeführt wird. Diese schlammartige, die abgeschiedenen Feststoffe enthaltende Masse wird bei dem in Fig. 3 gezeigten Auslührungsbeispiel durch Schwerkraft in eine Filtereinrichtung eingeführt, die bei dem in Fig. 3 gezeigten Beispiel eine Sackfilteranlage 33 ist. Es kann ein Sackfilter aus Papier, einem Edelstahlgewebe, einem Kunststoffgewebe oder dergleichen vorgesehen sein, wobei die Filterfeinheit entsprechend der Art und Größe der abgeschiedenen, in der schlammartigen Masse enthaltenen Partikel gewählt ist. Für die Filterfeinheit der Siebwand 21 der Siebtrommel 17 kommen, je nach Verschmutzungsart und Verwendungszweck der aufzubereitenden Flüssigkeit Filterfeinheiten von 2 Mikrometer bis 2000 Mikrometer in Betracht, insbesondere von 15 bis 35 Mikrometer und vorzugsweise 20 bis 25 Mikrometer. Entsprechende Filterfeinheiten sind für die Nach-Filtereinrichtung, d.h. sie Sackfilteranlage 33, zweckmäßig, um die von der schlammartigen Masse separierte Restflüssigkeit als aufbereitete Flüssigkeit wieder dem Flüssigkeitssystem zuzuführen. Wie Fig. 3 zeigt, befindet sich die Sackfilteranlage 33 oberhalb einer Öffnung 35 der Tankanlage 23, so dass das Filtrat der Sackfilteranlage 33 durch Schwerkraft in die Tankanlage 23 gelangt.

Bei dem in Fig. 4 gezeigten, abgewandelten Beispiel ist das untere Ende des Rohrstückes 31 mit dem Fördergehäuse 37 einer motorisch angetriebenen Förderschnecke 39 verbunden. Diese Fördereinrichtung fördert die schlammartige Masse schräg nach oben zu einem Austrittsstutzen 49, aus dem die schlammartige Masse in eine nicht gezeigte Entsorgungseinrichtung abfällt. Das untere Ende des Fördergehäuses 37 und/oder die Gehäusewand sind (nicht dargestellt) ebenfalls mit einer Nach-Filtereinrichtung versehen sein, die aus der über das Rohrstück 31 zugeführten, schlammartigen Masse Restflüssigkeit separiert, die als aufbereitete Flüssigkeit durch die darunterliegende Öffnung 35 in die Tankanlage 23 gelangt.

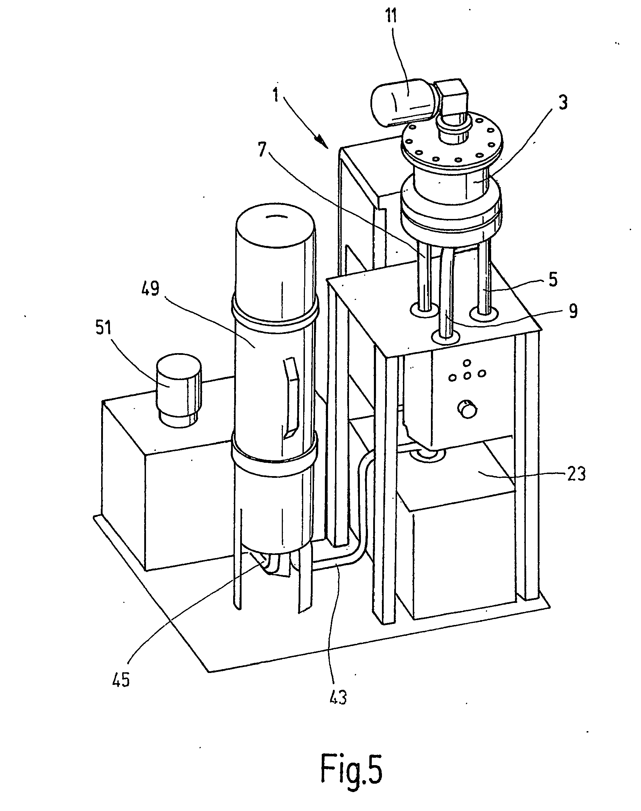

Wie den Fig. 1 und 5 zu entnehmen ist, ist an der Tankanlage 23 jeweils eine Nebenstrom-Feinfiltereinrichtung über Nebenstromleitungen 43 und 45 angeschlossen. Beim Beispiel von Fig. 1 handelt es sich bei der Feinfiltereinrichtung um eine Filterzentrifuge 47. Bei dem Beispiel von Fig. 5 handelt es sich um ein im Handel unter der Bezeichnung Offline Filter OLF erhältliches Feinfilter 49. Bei mit der Abscheidevorrichtung ausgerüsteten Rückspülfilteranlagen, die jeweils eine an der zugehörigen Tankanlage 23 angeschlossene Nebenstrom-Feinfiltereinrichtung 47 oder 49 aufweisen, läßt sich die Qualität beispielsweise einer Arbeitsflüssigkeit, die mittels einer Hydropumpe 51 einem zugeordneten Hydrosystem eingespeist wird, über sehr lange Betriebszeiträume auf dem für störungsfreien Betrieb erforderlichen Gütepegel halten.

## Patentansprüche

1. Rückspülfilteranlage, die aufweist
- einen Rückspülfilter (3) mit einem Zulauf (5) für eine aufzubereitende Flüssigkeit, die abzuscheidende Stoffe enthält, mit einem das Filtrat als aufbereitete Flüssigkeit einem zugehörigen Flüssigkeitssystem (23) zuführendem Ablauf (7) und einem Auslass (9) für mit abgeschiedenen Stoffen belastete Rückspülmengen,
- ein Absperrventil (13) zum Sperren und Freigeben des Auslasses (9) für die Rückspülmengen,
- eine Filtereinrichtung (33) zum Separieren von Restflüssigkeit aus einer schlammartigen Masse, die die abgeschiedenen Stoffe enthält, und
- eine Anordnung (35) zum Rückführen der Restflüssigkeit als aufbereitete Flüssigkeit zum zugehörigen Flüssigkeitssystem (23),
**dadurch gekennzeichnet, dass**
• eine Abscheidevorrichtung (1) vorhanden ist zur Abscheidung von Feststoffen aus der Rückspülmenge, mit
- einem Drallsieb in Form einer Siebtrommel (17) mit ringförmiger Siebwand (21),
- einem die Flüssigkeit der Siebtrommel (17) zuführenden Strahlrohr (15), das sich, bezogen auf seine Mündung (26) an der Innenseite der Siebwand (21) der Siebtrommel (17), zu dieser zumindest näherungsweise tangential erstreckt, um eine Drallströmung der Flüssigkeit an der Siebwand (21) zu erzeugen und das über eine Leitung mit dem Auslass (9) für die Rückspülmenge verbunden ist,
- einem die Siebtrommel (17) zur Aufnahme von die Siebwand (21) durchdringender Flüssigkeit umgebenden Gehäuse (19) und
- einem am Boden (27) der Siebtrommel (17) befindlichen Ausgang (29) zum Abführen der abgeschiedenen Stoffe, und dass
• die Abscheidevorrichtung (1) vor die Filtereinrichtung (33) geschaltet ist.

2. Rückspülfilteranlage nach Anspruch 1, **dadurch gekennzeichnet, dass** der Ausgang (29) am Boden (27) der Siebtrommel (1 7) eine Einrichtung (31) zum Abführen der auf den Boden (27) der Siebtrommel (17) abgesunkenen, schlammartigen Masse aufweist, die die abgeschiedenen Stoffe enthält.

3. Rückspülfilteranlage nach Anspruch 2, **dadurch gekennzeichnet, dass** die Einrichtung zum Abführen der schlammartigen Masse ein an einer Öffnung (29) des Bodens (27) befindliches, nach unten geneigtes, vorzugsweise vertikales, Rohrstück (31) für die Abfuhr der schlammartigen Masse durch Schwerkraft aufweist.

4. Rückspülfilteranlage nach Anspruch 3, **dadurch gekennzeichnet, dass** am unteren Ende des Rohrstückes (31) die die schlammartige Masse aufnehmende Filtereinrichtung (33) für das Separieren der in der schlammartigen Masse befindlichen Restflüssigkeit von den abgeschiedenen Stoffen vorgesehen ist.

5. Rückspülfilteranlage nach Anspruch 3, **dadurch gekennzeichnet, dass** das untere Ende des Rohrstückes (31) mit einer motorisch angetriebenen Fördereinrichtung (37, 39) zum Abführen der schlammartigen Masse versehen ist.

6. Rückspülfilteranlage nach Anspruch 5, **dadurch gekennzeichnet, dass** die Fördereinrichtung eine in einem Fördergehäuse (37) drehbare Förderschnecke (39) aufweist und dass dem Fördergehäuse (37) die Filtereinrichtung zugeordnet ist, um Restflüssigkeit aus der schlammartigen Masse zu separieren.

7. Rückspülfilteranlage nach einem der Ansprüche 1 bis 6, **dadurch gekennzeichnet, dass** das Absperrventil (13) als schnell öffnendes Ventil ausgebildet ist.

8. Rückspülfilteranlage nach einem der Ansprüche 1 bis 7, **dadurch gekennzeichnet, dass** das Flüssigkeitssystem einen einem Hydrosystem zugehörigen Tank (23) aufweist, dem vom Ablauf (7) des Rückspülfilters, dessen Filtrat als aufbereitete Flüssigkeit zuführbar ist und der mit der Filtereinrichtung (33) der Abscheidevorrichtung (1) zur Zufuhr der abgegeben Restflüssigkeit verbunden ist, und dass am Tank (23) eine Nebenstrom-Feinfiltereinrichtung (47, 49) angeschlossen ist.

## Claims

1. Backflushing filter unit, comprising
- a backflushing filter (3) with an inlet (5) for a fluid that is to be prepared, containing material to be separated out, with a drain (7) supplying the filtrate as a prepared fluid to an associated fluid system (23), and an outlet (9) for backflushing volumes containing materials to be separated out,
- a shut-off valve (13) for blocking and releasing the outlet (9) for the backflushing volumes,
- a filter unit (33) for separating residual fluid from a sludge-like mass containing the separated material, and
- an arrangement (35) for returning the residual fluid in the form of a prepared fluid to the associated fluid system (23),
**characterised in that**
• a separating means (1) is provided for separating solids from the backflushing volume, with
- a twisted sieve in the form of a sieve drum (17) with an annular sieve wall (21),
- a jet pipe (15) supplying the fluid to the sieve drum (17), extending with its opening (26) along the inside of the sieve wall (21) of the sieve drum (17) and at least approximately tangential in relation to the same in order to create a twisted stream of fluid along the sieve wall (21), and connected to the outlet (9) via a line for the backflushing volume,
- a housing (19) surrounding the sieve drum (17) for receiving fluid passing through the sieve wall (21), and
- an outlet (29) located in the floor (27) of the sieve drum (17) for draining the separated material, and **in that**
- the separating means (1) is located upstream of the filter unit (33).

2. Backflushing filter unit according to Claim 1, **characterised in that** the outlet (29) in the floor (27) of the sieve drum (17) comprises a means (31) for draining the sludge-like mass deposited on the floor (27) of the sieve drum (17) containing the separated material.

3. Backflushing filter unit according to Claim 2, **characterised in that** the means for draining the sludge-like mass comprises a preferably vertical pipe (31) at an opening (29) in the floor (27) directed downwards for draining the sludge-like mass by means of gravity.

4. Backflushing filter unit according to Claim 3, **characterised in that** the filter unit (33) receiving the sludge-like mass for separating the residual fluid contained in the sludge-like mass from the separated material is envisaged at the lower end of the pipe (31).

5. Backflushing filter unit according to Claim 3, **characterised in that** the lower end of the pipe (31) is equipped with a conveying means (37, 39) driven by a motor for disposing of the sludge-like mass.

6. Backflushing filter unit according to Claim 5, **characterised in that** the conveying means comprises a conveying coil (39) rotatable within a conveying housing (37), and **in that** the filter unit is associated with the conveying housing (37) in order to separate residual fluid from the sludge-like mass.

7. Backflushing filter unit according to one of the Claims 1 to 6, **characterised in that** the shut-off valve (13) takes the form of a fast opening valve.

8. Backflushing filter unit according to one of the Claims 1 to 7, **characterised in that** the fluid system comprises a tank (23) that is part of an hydraulic system which is connected to the drain (7) of the backflushing filter, the filtrate from which can be supplied in the form of a prepared fluid, and which is connected with the filter unit (33) of the separating means (1) for the supply of the separated residual fluid, and **in that** an auxiliary fine filtration unit (47, 49) is connected to the tank (23).

## Revendications

1. Installation de filtre à lavage à contre-courant ou rétro-lavage qui comporte
- un filtre (3) à rétro-lavage comprenant une entrée d'écoulement (5) pour un liquide à traiter, qui renferme des substances à séparer, une évacuation d'écoulement (7) amenant le filtrat en tant que liquide traité à un système de liquide (23) associé, et une sortie (9) des quantités de rétro-lavage chargés en substances ayant été séparées,
- une vanne d'isolement (13) pour bloquer et libérer la sortie (9) pour la quantité de rétro-lavage,
- un dispositif de filtre (33) pour séparer du liquide résiduel d'une masse de boues, qui renferme les substances ayant été séparées, et
- un agencement (35) pour recycler le liquide résiduel en tant que liquide traité vers le système de liquide (23) associé,
**caractérisée**
• **en ce qu'**il est prévu un dispositif séparateur (1) pour séparer des substances solides de la quantité de rétro-lavage et comprenant
- un tamis à effet rotationnel sous la forme d'un tambour de tamis (17) ayant une paroi de tamis (21) de forme annulaire,
- une tuyère (15) qui amène le liquide au tambour de tamis (17), s'étend, relativement à son embouchure (26) sur le côté intérieur de la paroi de tamis (21) du tambour de tamis (17), au moins approximativement tangentiellement par rapport à cette paroi, en vue d'engendrer un écoulement rotationnel du liquide sur la paroi de tamis (21), et est reliée par une conduite à la sortie (9) pour le volume de rétro-lavage,
- un carter (19) entourant le tambour de tamis (17) pour recevoir le liquide traversant la paroi de tamis (21), et
- un orifice de sortie (29) se trouvant dans le fond (27) du tambour de tamis (17), pour évacuer les substances ayant été séparées, et
• **en ce que** le dispositif séparateur (1) est monté en amont du dispositif de filtre (33).

2. Installation de filtre à rétro-lavage selon la revendication 1, **caractérisée en ce que** l'orifice de sortie (29) dans le fond (27) du tambour de tamis (17) présente un dispositif (31) pour évacuer la masse des boues qui s'est déposée sur le fond (27) du tambour de tamis (17) et renferme les substances ayant été séparées.

3. Installation de filtre à rétro-lavage selon la revendication 2, **caractérisée en ce que** le dispositif pour évacuer la masse des boues comprend un tronçon de tube (31) incliné vers le bas, de préférence vertical, qui se trouve au niveau d'une ouverture (29) du fond (27), et est destiné à l'évacuation de la masse des boues, par gravité.

4. Installation de filtre à rétro-lavage selon la revendication 3, **caractérisée en ce qu'**à l'extrémité inférieure du tronçon de tube (31) est prévu le dispositif de filtre (33) recevant la masse des boues, en vue de séparer le liquide résiduel se trouvant dans la masse des boues, des substances ayant été séparées.

5. Installation de filtre à rétro-lavage selon la revendication 3, **caractérisée en ce que** l'extrémité inférieure du tronçon de tube (31) est pourvue d'un dispositif de transport (37, 39) entraîné par moteur, pour l'évacuation de la masse des boues.

6. Installation de filtre à rétro-lavage selon la revendication 5, **caractérisée en ce que** le dispositif de transport comprend une vis sans fin de transport (39) pouvant tourner dans un carter de transport (37), et **en ce qu'**au carter de transport (37) est associé le dispositif de filtre en vue de séparer du liquide résiduel de la masse des boues.

7. Installation de filtre à rétro-lavage selon l'une des revendications 1 à 6, **caractérisée en ce que** la vanne d'isolement (13) est réalisée en tant que vanne à ouverture rapide.

8. Installation de filtre à rétro-lavage selon l'une des revendications 1 à 7, **caractérisée en ce que** le système de liquide présente un réservoir (23) qui fait partie d'un système hydraulique et auquel peut être amené, à partir de l'écoulement d'évacuation (7) du filtre à rétro-lavage, le filtrat de celui-ci en tant que liquide traité, et qui est relié au dispositif de filtre (33) du dispositif séparateur (1), pour l'amenée du liquide résiduel délivré, et **en ce qu'**au réservoir (23) est raccordé un dispositif de filtration fine (47, 49) d'écoulement en dérivation.
